# EUROPÄISCHE PATENTANMELDUNG

(11) **EP 1 158 264 A2**
(43) Veröffentlichungstag der Anmeldung: **28.11.2001**
(21) Anmeldenummer: 01112333.8
(22) Anmeldetag: 19.05.2001
(51) Int. Cl.: F42C 13/02, G01S 17/02

(54) **Verfahren zum Abgleich eines optronischen Zündsystems**

(30) Priorität: 25.05.2000 DE 10025962
(71) Anmelder: Diehl Munitionssysteme GmbH & Co. KG, 90552 Röthenbach (DE)
(72) Erfinder: Ganghofer, Andreas, 90471 Nürnberg (DE)
(74) Vertreter: Hofmann, Gerhard, Dipl.-Ing. Patentassessor

(57) **Zusammenfassung**

Es wird ein Verfahren zum Abgleich der Empfindlichkeit und zur Stabilisierung eines optronischen Zündsystemes beschrieben, das einen Controller und als Empfänger eine Avalanche Photo Diode (APD) aufweist. Um einen Abgleich einer Analogelektronik mit Potentiometern, ein Lasertrimmen oder eine individuelle Widerstandsbestückung zu vermeiden, ermittelt der Controller die Temperatur der APD und regelt die Biasspannung der APD derartig nach, daß bei jeder Temperatur die Empfindlichkeit der APD ihrer Sollempfindlichkeit entspricht.

## Beschreibung

Die Erfindung betrifft ein Verfahren zum Abgleich der Empfindlichkeit und zur Stabilisierung eines optronischen Zündsystems gemäß dem Oberbegriff des Anspruches 1.

Optronische Zündsysteme sind in verschiedenen Ausbildungen an sich bekannt. Beispielsweise beschreibt die DE 24 56 162 C2 einen Geschoßzünder mit einer optoelektronischen Meßeinrichtung, die bei Erreichen einer bestimmten Entfernung zwischen dem Geschoß und einer Ziel-Oberfläche an eine Auswerteschaltung ein Signal abgibt. Diese bekannte Meßeinrichtung weist einen durch eine Linse optische Impulse mit einer Impulsfolgefrequenz emittierenden Sender und einen über eine weitere Linse von der Ziel-Oberfläche zurückgestreute Anteile dieser optischen Impulse aufnehmenden, in bestimmtem Abstand vom Sender angeordneten Empfänger mit einem auf die Impulsfolgefrequenz abgestimmten schmalbandigen Filter und Empfangsverstärker auf. Zur Beseitigung der Auswirkungen von schaltungsbedingten Frequenzabweichungen ist zwischen das Bandpaßfilter und den Sender eine Regelschaltung geschaltet, durch die die Impulsfolgefrequenz des Senders der Mittelfrequenz des Bandpaßfilters nachgeführt ist. Das Eingangssignal der Regelschaltung ist ein aus dem Rauschpegel des Empfangsverstärkers durch das Bandpaßfilter ausgefiltertes Signal.

Ein optischer Abstandssensor für Geschoßzünder ist in der DE 26 08 066 C2 beschrieben, der nach dem Impuls-Rückstrahlprinzip arbeitet und im Empfangszweig in Reihe einen Verstärker, eine im Sendeimpulstakt geöffnete Torschaltung, eine integrierende Kondensatorschaltung und einen Schwellwertschalter aufweist. Im Empfangszweig dieses optischen Abstandssensors ist vor der Torschaltung ein Hochpaß angeordnet, dessen Grenzfrequenz wenig unterhalb der Sendeimpulsfolgefrequenz liegt. Die integrierende Kondensatorschaltung ist derartig geschaltet, daß sie positive und negative Signalanteile entsprechend ihrem Vorzeichen aufsummiert.

Eine Justiereinrichtung an optoelektronischen Annäherungszündern ist aus der DE 27 14 766 C2 bekannt, wobei im Kopf des Zünders nebeneinander die optischen Systeme eines mit einem kleinflächigen Richtstrahler versehenen Senders und eines mit einem ebenfalls kleinflächigen Strahlungsdetektor versehenen Lichtempfängers angeordnet sind, deren durch optische Linsen bewirkte Lichtcharakteristiken so einstellbar sind, daß sich deren Strahlen in einem Sollabstand vor dem Zünderkopf kreuzen. Dort ist der Strahlensender und der Strahlenempfänger auf je einem Schieber angeordnet, der quer verstellbar auf einem scheibenförmigen Trägerplättchen angeordnet ist. Die beiden Trägerplättchen sind ihrerseits in Aufnahmekörpern gehaltert, die jeweils um die durch das zugehörige Trägerplättchen verlaufende optische Achse der zugehörigen Linse drehbar und nach erfolgter Justierung arretierbar sind.

Die DE 39 18 243 C2 offenbart einen optronischen Annäherrungszünder, der auf ein Überschreiten einer Reflexionsamplitude anspricht und der eine einstellbare mechanische Blende in seinem, an einer Ziel-Oberfläche zu reflektierenden Strahlengang aus Sende- und Empfangs-Charakteristiken aufweist. Die Blende ist zum Zündschwellen-Feinabgleich nach Grobjustage von Sender und Empfänger ausgelegt und als quer zum Strahlengang mehr oder weniger tief in eine der Charakteristiken eintauchendes stiftförmiges Abschattungselement ausgebildet.

Ein optronischer Zünder insbesondere für eine großkalibrige Flugzeugbombe ist in der DE 39 27 8198 C2 beschrieben.

Der Erfindung liegt die Aufgabe zugrunde, ein Verfahren der eingangs genannten Art zu schaffen, wobei ein manueller Abgleich entfällt, so daß das optronische Zündsystem, d.h. der optronische Abstandszünder, mit einem fertigungsgerechten Design möglich ist.

Diese Aufgabe wird bei einem Verfahren der eingangs genannten Art erfindungsgemäß durch die Merkmale des Kennzeichenteiles des Anspruchs 1 gelöst. Bevorzugte Weiterbildungen des erfindungsgemäßen Verfahrens sind in den Unteransprüchen gekennzeichnet.

Optronische Zünder, die einen engen Empfindlichkeitsbereich einhalten müssen, weisen bislang das Problem auf, daß sie manuell abgeglichen werden müssen. Dieser Abgleich erfolgt beispielsweise durch die Einstellung dafür vorgesehener Potentiometer oder durch Lasertrimmen insbesondere in der Großserienfertigung bzw. durch individuelle Widerstandsbestückung, insbesondere in der Kleinserienfertigung.

Die Gesamtempfindlichkeit des optronischen Zündsystemes wird durch die Leistung des Senders und die Empfindlichkeit des Empfängers sowie durch die Verstärkung der Verstärkerkette des Systemes bestimmt. Soll das Zündsystem eine enge Sollempfindlichkeit besitzen, so darf durch keine Sender-, Empfänger- und Verstärker-Kombination diese Gesamt-Empfindlichkeitsgrenze überschritten werden. Daraus resultiert, daß die einzelnen Komponenten jeweils eine enge Toleranz besitzen müssen und daß eine solche enge Toleranz auch für deren Beschaltung notwendig ist. Kommt bei einem optronischen Zündsystem eine Avalanche Photo Diode (APD) als Empfänger zur Anwendung, so ist die Verstärkung des Lawineneffektes nur sehr ungenau einstellbar, was bedeutet, daß ein Abgleich noch wichtiger wird. Für diesen Abgleich werden bislang üblicherweise lasertrimmbare Dickfilmwiderstände verwendet, wenn es sich um eine Großserienfertigung des optronischen Zündsystemes handelt, wie oben erwähnt worden ist. Bei Kleinserien erfolgt üblicherweise eine individuelle Bestückung mit den passenden Widerständen, wie ebenfalls bereits weiter oben ausgeführt wurde. Unabhängig davon, ob es sich um eine Kleinserienfertigung oder um eine Großserienfertigung handelt, muß zum Abgleich bislang ein sog. closed loop-Betrieb verwendet werden, d.h. das gesamte Zündsystem bzw. der gesamte Sensor muß montiert und in Betrieb gesetzt werden, um den Abgleich vornehmen zu können. Der Abgleich ist in der Montage- bzw. Fertigungskette folglich erst sehr spät durchführbar. Das bedeutet, daß auf die abzugleichenden Komponenten nur partiell Schutzüberzüge aufgebracht werden können oder daß die Schutzüberzüge manuell nach Durchführung des Abgleichs aufgebracht werden. Durch manuelle Bestückung, durch das Aufbringen der Schutzumhüllungen und durch die erforderliche Qualitätssicherung entstehen bei solchen bekannten optronischen Zündsystemen relativ hohe Herstellungskosten. Außerdem wird das elektromechanische Design eingeengt, weil die abzugleichenden Komponenten im montierten Zustand zu Abgleichzwecken zugänglich sein müssen.

Diese Mängel werden mit Hilfe des erfindungsgemäßen Verfahrens in vorteilhafter Weise beseitigt. Bei erfindungsgemäßen optronischen Zündsystemen, die bereits mit einem Controller, vorzugsweise mit einem Flash-Speicher, ausgestattet sind, wird die diskrete Regelung der Biasspannung der APD über ein Temperatur-Kompensationsnetzwerk ersetzt durch eine Regelung über den besagten Controller. Dabei ermittelt der Controller die Temperatur der APD und regelt deren Biasspannung gezielt derartig nach, daß bei jeder Temperatur die Empfindlichkeit der Sollempfindlichkeit entspricht. Diese Regelung kann in vorteilhafter Weise auch zum Trimmen der Empfindlichkeit verwendet werden. Dabei wird beim Trimmen die individuelle Biasspannung der APD so ermittelt, daß die Empfindlichkeit des Sensors der Sollempfindlichkeit entspricht. Von dem der Normempfindlichkeit entsprechenden Arbeitspunkt der Temperaturkurve ausgehend kann im Betrieb des Zündsystems dann wieder eine Temperaturkompensation durchgeführt werden. Dabei wird der Controller beim Abgleich zweckmäßigerweise mit einer Basisbetriebssoftware geladen, welche die APD auf einen mittleren Verstärkungsfaktor einstellt.

Zur Durchführung des erfindungsgemäßen Verfahrens wird das optronische Zündsystem beim Abgleich in Betrieb gesetzt und es werden die erzielten Signalpegel, d.h. die Empfindlichkeit, gemessen. Aus dem jeweils gemessenen Wert kann die Verstärkung, die eine Funktion der Biasspannung der APD ist, errechnet werden. Anschließend kann der Controller mit der Biasspannung programmiert werden.

Aus dem Obigen ergibt sich, daß ein analoger Abgleich, wie er bislang durchgeführt wird, in vorteilhafter Weise nicht mehr notwendig ist. Ein weiterer Vorteil besteht darin, daß auch eine eventuelle Alterung der Sensorik jederzeit durch eine Umprogrammierung ausgeglichen werden kann.

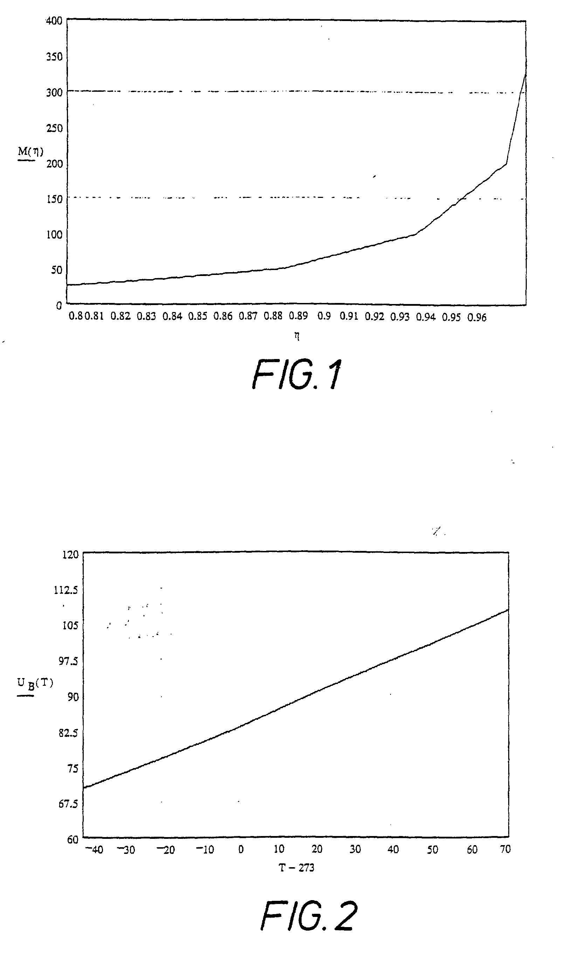

Zur weiteren Verdeutlichung des Erfindungsgedankens dienen die nachfolgend beschriebenen Figuren 1 und 2.
- Figur 1: zeigt den Funktionszusammenhang zwischen dem Verhältnis η zwischen Biasspannung zur Durchbruchspannung und der APD-Verstärkung M(η), und
- Figur 2: den Funktionszusammenhang zwischen der Temperatur (T) und der Biasspannung U_{B}(T).

Entsprechend Figur 1 ist über das Verhältnis η der Biasspannung zur Durchbruchspannung die Eigenverstärkung der APD (Lawineneffekt) einzustellen. Ist das Empfangssystem zu unempfindlich, so muß beim Trimmen das Verhältnis η erhöht werden. Ist das Empfangssystem umgekehrt zu empfindlich, so muß beim Trimmen das Verhältnis η erniedrigt werden.

Da - wie aus Figur 2 ersichtlich ist - die Durchbruchspannung U_{B} stark von der Temperatur (T-273) abhängig ist, muß das Verhältnis η (sh. Figur 1) bei einer Temperaturänderung entsprechend nachgeführt werden.

## Patentansprüche

1. Verfahren zum Abgleich der Empfindlichkeit und zur Stabilisierung eines optronischen Zündsystemes, das einen Controller und als Empfänger eine APD aufweist,
**dadurch gekennzeichnet,**
**daß** der Controller die Temperatur der APD ermittelt und die Biasspannung der APD derartig nachregelt, daß bei jeder Temperatur die Empfindlichkeit ihrer Sollempfindlichkeit entspricht.

2. Verfahren nach Anspruch 1,
**dadurch gekennzeichnet,**
**daß** die Nachregelung auch zum Trimmen der Empfindlichkeit verwendet wird, indem beim Trimmen die der Normalempfindlichkeit des Systems entsprechende individuelle Biasspannung der APD ermittelt wird.

3. Verfahren nach Anspruch 2,
**dadurch gekennzeichnet,**
**daß** von dem der Normalempfindlichkeit entsprechenden Arbeitspunkt der Temperaturkurve der APD ausgehend im Betrieb des Zündsystems dann eine Temperaturkompensation durchgeführt wird.

4. Verfahren nach einem der Ansprüche 1 bis 3,
**dadurch gekennzeichnet,**
**daß** der Controller beim Abgleich mit einer Basisbetriebssoftware geladen wird, die die APD auf einen mittleren Verstärkungsfaktor einstellt.
